# FASCICULE DE BREVET EUROPEEN

(11) **EP 1 752 356 B1**
(45) Date de publication et mention de la délivrance du brevet: **25.03.2009**
(21) Numéro de dépôt: 06291281.1
(22) Date de dépôt: 08.08.2006
(51) Int. Cl.: B62B 3/08

(54) **Chariot d'atelier**
Werkstattwagen
Tool wagon

(30) Priorité: 08.08.2005 FR 0508415
(43) Date de publication de la demande: 14.02.2007
(73) Titulaire: Coutier Industrie S.A.R.L., 57970 Basse Ham (FR)
(72) Inventeur: Coutier, Charles, 57570 Cattenom (FR)
(74) Mandataire: Lavialle, Bruno François Stéphane

(56) Documents cités:
- FR-A- 976 769
- FR-A- 1 464 846
- FR-A- 2 829 984
- GB-A- 830 406
- US-A- 1 636 043
- US-A- 4 073 369
- "TIPPING WAGON SHIELDS OWN WHEELS FROM BLOCKAGE" GUIDEBOOK TO CYTOKINES AND THEIR RECEPTORS, vol. 8, no. 7, juillet 1963 (1963-07), pages 37-38, XP001169033

## Description

La présente invention concerne les chariots d'atelier utilisés notamment en bord de ligne de montage ou d'assemblage, notamment dans l'industrie automobile, connue par document FR 1 464 846.

L'un des principaux problèmes, notamment dans l'industrie automobile tient à l'amélioration de l'ergonomie des postes de travail. En particulier pour les postes de travail situés en bord de ligne de montage, on cherche à faciliter la manutention des pièces qu'un opérateur doit puiser l'une après l'autre dans un magasin pour les mettre en place sur le véhicule (ou le moteur ou ...) en cours de montage et situé dans son poste de travail.

En outre, une recherche permanente de gain de place au sol et de flexibilité de la production dans les usines de ce type ont conduit les constructeurs à abandonner les installations fixes (casiers, présentoirs...) le long des lignes de montage pour généraliser l'utilisation de chariots d'atelier.

Ces derniers sont devenus de plus en plus perfectionnés pour répondre aux exigences de plus en plus contraignantes du point de vue de la maniabilité et de la facilité d'accès aux produits qu'ils portent (diminution de la pénibilité), de leurs dimensions et de leurs degrés de liberté (gains de place) en bord de ligne afin de diminuer la surface de l'emprise au sol par les zones d'amenée et de transport des chariots dans l'atelier.

### OBJET DE L'INVENTION

Le chariot de l'invention est une réponse adaptée à ces exigences et à l'évolution des lignes de montage et des postes de bord de ligne.

### BREVE DESCRIPTION DE L'INVENTION

A cet effet, l'invention a donc pour objet un chariot d'atelier comprenant une base roulante équipée à ses deux extrémités opposées d'organes pour son attelage à d'autres bases roulantes ou à un véhicule tracteur et en partie inférieure, d'organes de roulement avant, arrière et latéraux, qui comporte :
- au moins un plateau monté basculant au-dessus de la base autour d'un axe, parallèle à cette base et dont la face supérieure comporte des moyens (26) pour recevoir et caler un conteneur de manière que la projection verticale du centre de gravité de l'ensemble plateau/conteneur soit décalée par rapport à l'axe de basculement, du côté du basculement
- entre la base roulante et le plateau, un loquet de blocage du plateau dans une position horizontale et dans une position inclinée et
- un organe élastique de rappel du plateau dans sa position horizontale dont l'effort est inférieur au couple résultant du décalage susdit du centre de gravité lorsque le plateau (5) est chargé, et supérieur à ce couple lorsque le conteneur est vide.

Cette disposition permet de créer un couple autour de l'axe de basculement qui, lorsqu'on le libère, provoque l'inclinaison du plateau par rapport à la base roulante sans effort significatif de l'opérateur. L'opérateur peut également fournir une aide manuelle minime pour modifier l'équilibre et amorcer le basculement du plateau. Le chariot est ainsi apte à répondre aux exigences ergonomiques du poste.

Le loquet de blocage est en particulier porté par un levier à manoeuvre manuelle, articulé à la base roulante sur l'un de ses côtés.

En outre, a combinaison d'un loquet et d'un organe élastique de rappel pour le plateau (organe qui peut être également amortisseur) augmente encore le confort de l'utilisateur. En effet le relevage du plateau dont le conteneur est épuisé s'opère automatiquement sous l'effet de l'organe de rappel quand l'opérateur le libère. La base roulante sera aussi avantageusement équipée d'organes destinés à encaisser les efforts dus à la charge basculante et à amortir les fins de course de basculement du plateau, dans un sens comme dans l'autre, tels par exemple que des tampons en élastomère ou des tampons amortisseurs à dissipation d'énergie. De préférence, l'organe élastique de rappel du plateau est constitué par un ensemble oléo-pneumatique comprenant un vérin hydraulique en communication avec une nourrice pressurisée par l'intermédiaire de restrictions de débit réglables.

Dans un mode de réalisation de l'invention, les moyens pour recevoir et caler un conteneur sont constitués par des cornières perpendiculaires au plateau et aux coins de ce dernier, et dont l'angle intérieur possède des surfaces de glissement d'un conteneur.

Ces surfaces de glissement peuvent être réalisées sous la forme de goussets triangulaires inclinés équipant certaines au moins des cornières précitées. Ces goussets ont plusieurs fonctions. Chacun d'eux constitue d'abord une cale de montage au moment de la fixation des cornières aux coins du plateau par son bord inférieur qui repose sur le plateau avant le soudage. Ils forment ensuite une rampe pour écarter le conteneur des quatre cornières, réduisant les risques de blessure par pincement des opérateurs entre le conteneur et les cornières de guidage. Enfin ils sont une forme de réalisation des moyens permettant de décaler la projection du centre de gravité de la charge par rapport à l'axe de basculement. Il suffit en effet de prévoir deux goussets plus important d'un côté de l'axe de manière à provoquer un glissement du conteneur au moment de son chargement, plus important sur les grands goussets, donc un décalage latéral ou longitudinal du conteneur du côté des petits goussets, selon que le basculement est latéral ou vers l'arrière (axe de basculement longitudinal ou transversal).

Un autre moyen de réaliser le décentrement de la projection du centre de gravité consiste à décaler latéralement la position de l'axe de basculement par rapport à l'axe géométrique longitudinal médian du plateau, ou de prévoir une aide manuelle minime de l'opérateur pour modifier l'équilibre et amorcer le basculement du plateau.

Le chariot selon l'invention comportera avantageusement des béquilles anti-basculement au moins d'un côté.

On mentionnera par ailleurs que le bord de la base roulante, du côté du basculement, est, pour sa plus grande part, situé en retrait du bord correspondant du plateau. Cette mesure limite l'étendue des endroits où un pincement du pied de l'opérateur entre la base et le plateau peut se produire. Pour supprimer totalement ce risque, un bouclier déformable relie le bord du plateau et le bord de la base pour sa part non située en retrait.

D'autres caractéristiques et avantages de l'invention ressortiront de la description de quelques exemples de réalisation donnés ci-après à titre indicatif.

### BREVE DESCRIPTION DES DESSINS

Il sera fait référence aux dessins annexés parmi lesquels :
- la figure 1 est une vue schématique en perspective d'un chariot conforme à l'invention,
- la figure 2 est une vue simplifiée de l'avant de ce chariot,
- la figure 3 illustre un mode de réalisation particulier du chariot de l'invention dans lequel deux plateaux superposés sont mis en oeuvre,
- la figure 4 est un schéma illustrant l'une des réalisations possibles des moyens d'arrêt et d'amortissement du basculement du plateau et de la charge,
- la figure 5 illustre une variante de réalisation du chariot selon l'invention,
- les figures 6 et 7 sont des schémas illustrant deux autres variantes de réalisation de la base roulante d'un chariot selon l'invention,
- la figure 8 illustre un moyen de stabilistion de la position d'un chariot et
- la figure 9 est un schéma fonctionnel d'un mécanisme de rappel possible du plateau dans un chariot de l'invention.

### DESCRIPTION DETAILLEE DE L'INVENTION

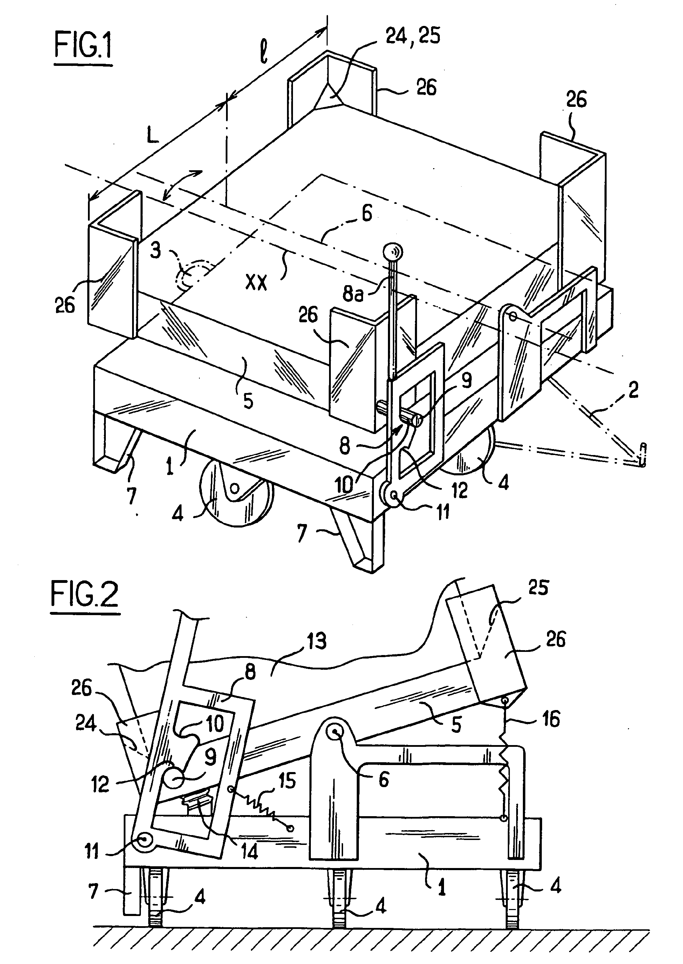

Le chariot représenté à la figure 1 comporte une base roulante 1 dont les extrémités sont pourvues d'organes pour son attelage à d'autres bases roulantes ou à un véhicule tracteur, c'est-à-dire un timon 2 et un anneau 3. Le timon peut être équipé d'un boîtier destiné à coopérer avec une boule d attelage qui serait prévue aux lieu et place de l'anneau 3. Des roues 4, avant, arrière et latérales permettent le déplacement de la base sur le sol. La roue avant peut être directrice ou montée folle autour d'un axe vertical comme l'est la roue arrière.

La base 1 est surmontée d'un plateau 5 qui est articulé autour d'un axe longitudinal 6 situé dans un plan qui est parallèle à la base. Cet axe est, à la figure 1, représenté décalé latéralement par rapport à l'axe longitudinal de symétrie XX du plateau 5, comme l'illustrent les dimensions l et L. Le plateau a donc une tendance naturelle à basculer latéralement du côté de la base qui est équipée de béquilles 7 destinées à empêcher un renversement total du chariot au cas où l'inertie de la charge serait importante.

Un loquet 8 muni d'un levier de manoeuvre 8a, coopère avec un doigt 9 du plateau pour s'opposer au basculement de ce dernier par un premier cran 10. Le loquet est articulé à la base 1 autour d'un axe 11 parallèle à l'axe 6 de sorte que sa manoeuvre vers l'extérieur de la base dégage le doigt 9 ce qui permet au plateau de basculer. On a prévu ici un loquet qui est manoeuvré manuellement, mais on pourra prévoir en variante un levier manoeuvré au pied, en particulier une pédale. Par ailleurs, pour une meilleure sécurité contre une manoeuvre involontaire du loquet ou du levier, qui provoquerait un basculement inopportun du plateau, on pourra prévoir un doigt ou une biellette d'indexage ou de verrouillage (non représenté ici) bloquant le loquet ou levier dans sa position. On pourra également prévoir une crémaillère permettant une descente "pas-à-pas" de la partie basculante du plateau.

A la figure 2, on a représenté le chariot de la figure 1 vu en bout. Certains des éléments déjà décrits portent les mêmes références. Le plateau 5 est représenté incliné latéralement, et retenu dans cette position par un deuxième cran 12 du loquet 8. On a représenté sur le plateau un conteneur 13 qui est naturellement décentré par rapport à l'axe 6 et donc qui ajoute un couple de basculement à la tendance naturelle du plateau à s'incliner latéralement. Sous l'effet de cette charge, le plateau atteint une butée 14 en élastomère et l'écrase élastiquement. Il est alors possible de placer le deuxième cran 12 au-dessus du doigt 9. On constate sur cette figure que le loquet 8 est sollicité en permanence par un ressort 15 qui tend à le faire tourner autour de l'axe 11 en direction du doigt 9, de sorte que quand le doigt 9 est en prise soit avec le cran 10 soit avec le cran 12, il faut une intervention de l'opérateur pour dégager le doigt 9 du loquet 8.

Le plateau est en outre soumis à l'effet d'un organe élastique de rappel (un ressort) 16 qui tend à le ramener dans sa position horizontale. La force de ce ressort est réglée de manière à pouvoir vaincre le couple de basculement résultant de la tendance naturelle du plateau à basculer augmentée de la charge que constitue un conteneur vide. Elle demeure cependant inférieure à une valeur qui s'opposerait au basculement du plateau portant un conteneur plein. On comprend qu'ainsi, un conteneur plein porté par le plateau 5 basculera si un opérateur libère le doigt 9 de son appui sur le cran 10 du loquet 8. Ce basculement sera freiné par tout moyen connu placé par exemple en parallèle avec le ressort 16 (tel qu'un amortisseur unidirectionnel dont seule l'élongation serait freinée par perte de charge hydraulique alors que sa contraction serait pratiquement libre). Tant que le conteneur est en service, il est progressivement vidé et l'action cumulée du tampon élastomère 14 et du ressort 16 parvient à solliciter le plateau vers sa position horizontale, mouvement qui est entravé par le cran 12 du loquet 8. La violence de ce mouvement de retour peut également être contrôlée (si nécessaire) par un autre amortisseur unidirectionnel (qui permet un réglage différent du premier amortisseur compte tenu du fait que les efforts en jeu ne sont pas du même ordre au basculement qu'au relevage) ou par un seul amortisseur double agissant autant pour le basculement que pour le retour.

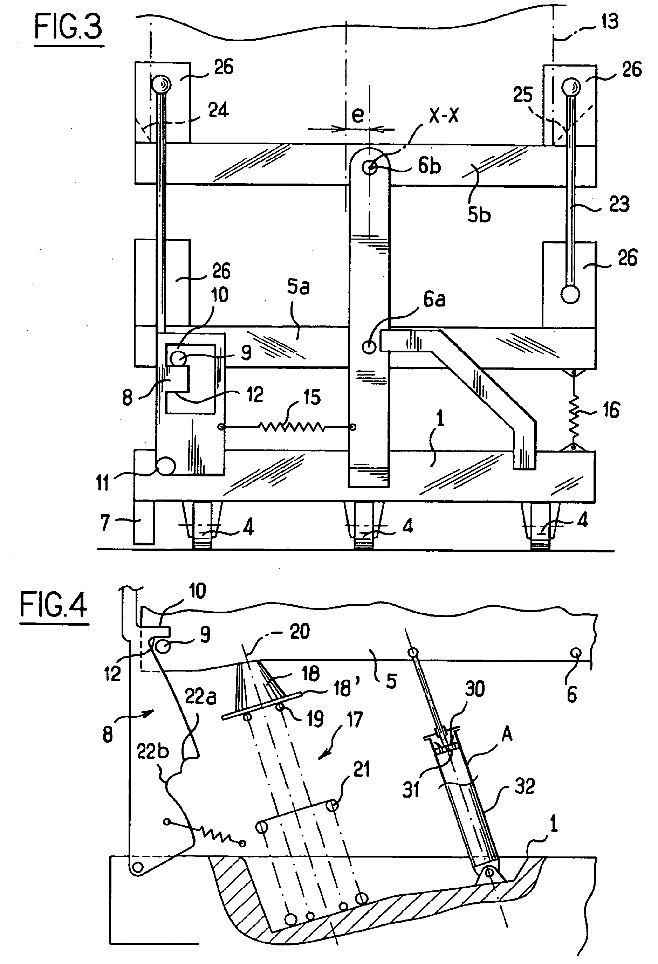

La figure 4 illustre par un schéma une butée particulière pour un chariot apte à recevoir des conteneurs présentant une charge comprise dans une plage importante, allant par exemple de zéro à cinq cents kilogrammes. On retrouve sur cette figure certains des éléments déjà décrits en regard des figures précédentes avec les mêmes références. Le plateau 5 bascule autour de l'axe 6 (qui peut être déporté au voisinage du bord latéral du plateau) à l'encontre d'une butée composite 17 s'étendant entre ce plateau et la base 1. Cette butée comporte un tampon en matériau élastomère 18 maintenu contre le plateau 5 ou au voisinage de celui-ci lorsqu'il est en position horizontale au moyen d'un premier ressort 19. Cet ensemble peut se déformer par compression le long d'un guide rectiligne non représenté, d'axe 20 et de préférence télescopique. Après un certain degré de compression, correspondant par exemple à l'équilibrage d'un couple de basculement engendré par une charge de l'ordre de 150 kg, la base 18' du tampon élastique rencontre un second ressort 21 qui se déforme relativement peu contre un couple engendré par une charge comprise par exemple entre 150 et 500 kg. Le loquet 8 comporte deux crans (en plus du cran 12) 22a et 22b qui correspondent respectivement à la retenue du plateau pour une inclinaison atteinte sous une charge de 150 kg et à celle du plateau incliné sous une charge de 500 kg. Entre les deux crans, la différence d'inclinaison est très faible (de l'ordre de 2 ou 3 degrés) de sorte que, quelle que soit la charge, la présentation des produits est inchangée pour l'opérateur. Cette figure illustre également un amortisseur unidirectionnel A du genre de ceux rappelés ci-dessus, tel que lorsque le plateau 5 s'incline, il n'y a pas de freinage hydraulique (des clapets 30 découvrant des orifices du piston 31 qui parcourt le cylindre 32 sans résistance hydraulique) tandis qu'à l'extension, le piston est freiné car les clapets sont fermés et la section de passage du fluide est très réduite. Ceci évite notamment que le plateau remonte trop vite après libération notamment du cran 22b, et donc une décompression brutale du ressort 21 à très grande raideur. On pourra éventuellement prévoir de récupérer hydrauliquement l'énergie ainsi libérée pour relever le plateau à vide.

A la figure 3, deux variantes de réalisation du chariot de l'invention sont représentées. La première concerne le nombre de plateaux inclinables -ici deux- 5a et 5b reliés entre eux par une biellette de synchronisation 23 et articulés sur la base roulante 1 autour de deux axes parallèles et superposés 6a et 6b. La deuxième variante concerne les moyens de réception et de calage du conteneur 13 permettant d'obtenir le décalage latéral du centre de gravité produisant le basculement. Ceux-ci sont constitués par des goussets 24 et 25 disposés dans l'angle interne de cornières 26 (de telles cornières sont également dénommées "coins de gerbage" par les spécialistes de la manutention) soudées aux quatre coins de chaque plateau 5, 5a, 5b. On pourra prévoir comme ici que chaque cornière 26 est équipée de tels goussets, ou en variante que deux cornières seulement en sont équipées, d'un même côté ou en diagonale. Dans le cas de la figure 1, les goussets sont identiques pour toutes les cornières. Ils servent de cales de montage lors du soudage des cornières 26 aux coins des plateaux en reposant par leur arête inférieure sur la surface supérieure du plateau. Ils servent également à écarter le conteneur des cornières pour ainsi préserver les opérateurs d'accidents par par pincement entre ce conteneur et ces cornières. Les cornières 26 pourront être légèrement évasées vers l'extérieur pour générer un centrage progressif du conteneur par rapport au chariot au fur et à mesure de la descente du conteneur sur le plateau. Par ailleurs, comme cela a été illustré sur la figure 2, on pourra prévoir que les cornières 26 sont moins hautes du côté qui bascule vers le bas, de façon à permettre un gain de place lorsque plusieurs chariots sont disposés côte à côte.

Dans le cas de la figure 3, les goussets latéraux 24 sont de dimensions plus petites que ceux 25 du côté opposé, de sorte que le conteneur 13 est décentré sur le plateau 5b d'une valeur e par rapport à l'axe 6b qui est quant à lui sur l'axe de symétrie XX du plateau. Ce décentrement constitue ici le moyen générateur du couple de basculement du plateau autour de son axe.

On pourra enfin disposer des plots de centrage sur la surface du plateau, par exemple quatre plots, à l'intérieur des coins, afin de pouvoir réaliser un auto-centrage de conteneurs plus petits. De tels plots (non représentés ici) pourront d'ailleurs être installés de façon permanente dans la mesure où les conteneurs présentent en général une réservation dans leur face inférieure.

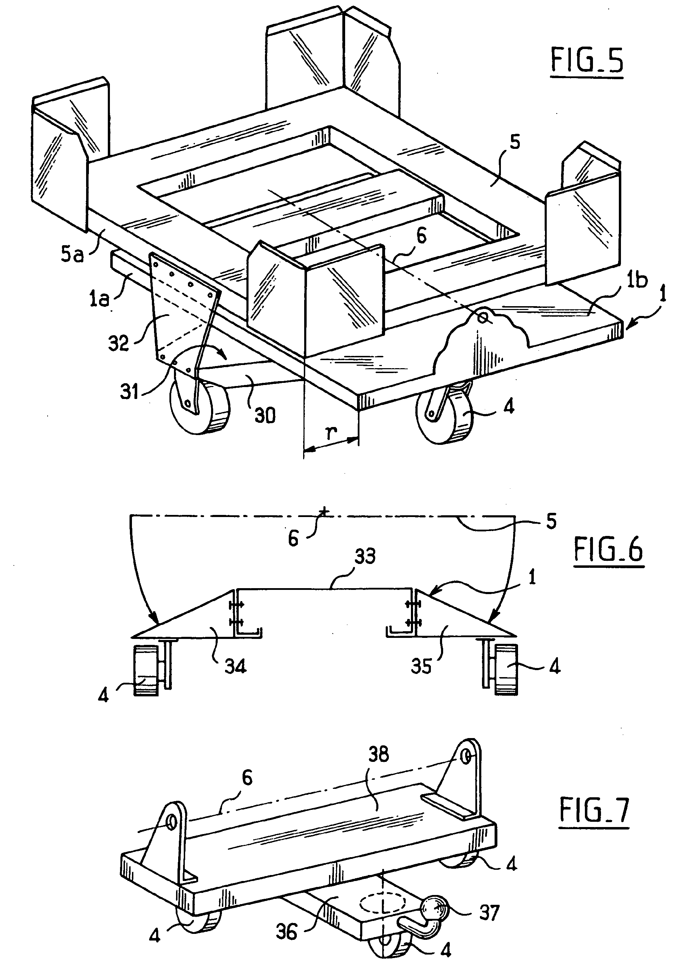

On retrouve à la figure 5 la plupart des éléments déjà décrits avec les mêmes références. La variante de construction illustrée par cette figure réside dans la structure de la base 1. En effet, alors que dans l'exemple antérieur le périmètre de la base et celui du plateau 5 sont identiques, ici la base possède un bord la en retrait d'une valeur r par rapport au bord correspondant 5a du plateau. Pour conserver la stabilité latérale du chariot, la roue latérale 4 est portée par une potence 30 dont la surface supérieure 31 est située à un niveau inférieur à celui 1b de la surface supérieure de la base 1. On comprend qu'ainsi le basculement peut avoir une amplitude un peu supérieure à celui obtenu avec la réalisation précédente. En outre et surtout, le retrait supprime la possibilité de pincement du pied de l'opérateur entre le bord du plateau 5 et celui de la base 1. Pour que ce risque soit totalement éliminé, on a placé entre la potence 30 et le plateau 1 un bouclier de protection déformable 32, un panneau de caoutchouc par exemple, qui forme une barrière entre la potence et le plateau.

La figure 6 illustre par un schéma en coupe une structure simplifiée d'une base 1 comportant un longeron longitudinal 33 auquel sont fixées des potences latérales 34 et 35 portant latéralement déportées les roues 4 de la base comme également illustré à la figure 5.

La figure 7 est un schéma de base qui illustre une structure de celle-ci formée par un longeron 36 qui porte à l'arrière une sphère d'attelage 37 et par une traverse 38. L'axe 6 de basculement est ici transversal et le longeron est situé sous la traverse qui autorise donc un basculement d'amplitude augmentée. On notera que lors du basculement, le conteneur vient en surplomb de la sphère d'attelage et constitue un obstacle empêchant l'opérateur d'approcher la sphère de trop près et de s'y blesser.

Dans les modes de réalisation décrites ci-dessus, le couple de basculement initial résulte du décalage du coté du basculement de la projection verticale du centre de gravité de l'ensemble conteneur/plateau, le plateau pouvant lui-même à vide avoir une répartition de ses masses telles que ce décalage existe même sans conteneur. Le loquet 8 à manoeuvre manuelle assure le blocage du plateau (chargé ou non) contre sa tendance naturelle à basculer.

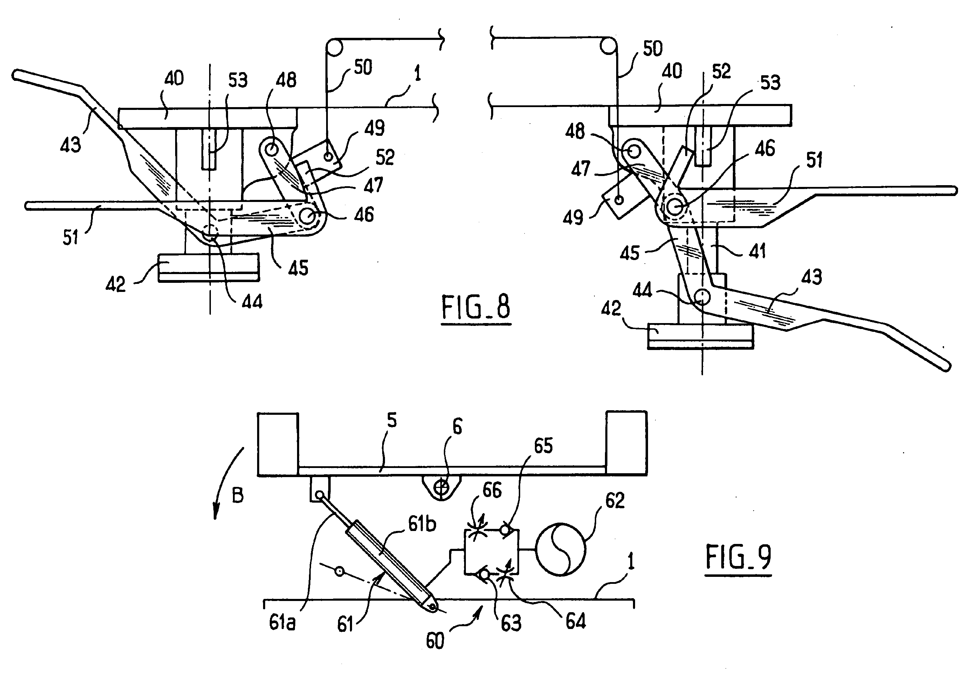

A la figure 8, la base 1 comporte deux organes de blocage de la position du chariot lors de son utilisation à poste fixe comme magasin de bord de ligne par exemple. Chaque organe comporte une platine 40 fixée à la base et forment un guide pour une tige coulissante 41 équipée à son extrémité inférieure d'un patin 42 susceptible d'être abaissé ou relevé dans le guide. Ses moyens de manoeuvre comprennent une première pédale 43 articulée autour d'un axe 44 sur le patin 42 et prolongée en une seule pièce au-delà de cet axe par un levier 45. Ce dernier est articulé en 46 par son autre extrémité à un second levier 47 qui est lui-même articulé en 48 à la platine 40. Ce levier 46 possède une excroissance latérale 49 à laquelle est attaché un câble 50. Une seconde pédale 51 est articulée à l'ensemble précédent autour de l'articulation 46. Cette pédale possède un taquet arrière 52 qui peut prendre appui sur une butée fixe 53 de la platine. Des organes de rappel élastiques sont intégrés dans chaque mécanisme notamment pour accompagner la remontée du patin.

Les deux organes sont situés par exemple aux extrémités d'un même côté longitudinal de la base. L'organe de droite de la figure 8 est représenté en service, c'est-à-dire le patin 42 plaqué au sol.

Si l'opérateur se trouve au voisinage de cet organe et s'il souhaite débloquer le chariot, il agit sur la pédale 51 qui est celle la plus haute. Le taquet 52 prend appui sur la butée 53 et modifie la position relative des trois articulations 44, 46 et 48. Le patin 42 remonte sous l'effet d'un rappel élastique et le mécanisme prend la configuration illustrée par la partie gauche de la figure 8.

Si l'opérateur se trouve au voisinage de l'autre organe, il agit sur la pédale 43, la plus haute, ce qui allonge la géométrie des trois articulations 44, 46 et 48 en déplaçant l'excroissance 49, ce qui provoque une traction du câble 50 qui lui agit sur la géométrie de l'organe de droite en le débloquant. L'opérateur est averti de ce déblocage par le bruit engendré et ne poursuit pas l'enfoncement de la pédale 43. Le chariot est alors débloqué. Les deux pédales 43 sont alors en haut et prêtes à être actionnées. Un blocage du chariot par l'une ou l'autre des pédales conduit à la tension du câble entre les deux organes.

Enfin, à la figure 9 on a représenté un mécanisme oléo-pneumatique 60 qui assure à la fois l'amortissement du basculement du plateau 5 lorsqu'il est chargé et so redressement lorsqu'il est vide. En agissant sur le loquet 8, la plateau plein est libéré et bascule dans le sens B. Ce mouvement est contrôlé par le vérin hydraulique 61 articulé entre la base 1 et le plateau 5 dont la tige 61a rentre dans le corps 61b en refoulant l'huile en direction d'une nourrice pressurisée 62 au travers d'un clapet unidirectionnel 63 et d'une restriction de débit 64. Le réglage de la pressurisation (gonflage) de la nourrice et de la restriction permet d'agir sur la vitesse du basculement. Le loquet immobilise le plateau en position basse pendant le temps de son utilisation. Puis le conteneur tétant vide, l'opérateur à nouveau libère le plateau qui remonte sous l'effet de la sortie de la tige du vérin grâce à une alimentation de ce dernier par la nourrice 62 au travers d'un clapet unidirectionnel 65 opposé au précédent et d'une restriction de débit réglable 66 qui permet de consigner la vitesse de remontée.

## Revendications

1. Chariot d'atelier comprenant une base (1) roulante équipée à ses deux extrémités opposées d'organes(2, 3) pour son attelage à d'autres bases roulantes ou à un véhicule tracteur et en partie inférieure, d'organes (4) de roulement avant, arrière et latéraux, et au moins un plateau (5) monté basculant au-dessus de la base (1) autour d'un axe (6), parallèle à cette base et comportant, entre la base roulante(1) et le plateau (5), un loquet (8) de blocage du plateau (5) dans une position horizontale et dans une position inclinée, **caractérisé en ce que** la face supérieure du plateau comporte des moyens (26) pour recevoir et caler un conteneur de manière que la projection verticale du centre de gravité de l'ensemble plateau/conteneur soit décalée par rapport à l'axe (6) de basculement, du côté du basculement et **en ce qu'**un organe élastique (16) de rappel du plateau (5) dans sa position horizontale est attelé entre la base roulante (1) et le plateau 5), l'effort de cet organe étant inférieur au couple résultant du décalage susdit du centre de gravité lorsque le conteneur (5) est chargé, et supérieur à ce couple lorsque le conteneur est vide.

2. Chariot d'atelier selon la revendication 1, **caractérisé en ce que** l'axe (6) de basculement est longitudinal.

3. Chariot d'atelier selon la revendication 1, **caractérisé en ce que** l'axe (6) de basculement est transversal.

4. Chariot d'atelier selon l'une des revendications précédentes, **caractérisé en ce que** le bord (1a) de la base (1) roulante, du côté du basculement, est, pour sa plus grande part, situé en retrait (r) du bord (5a) correspondant du plateau (5).

5. Chariot d'atelier selon la revendication 4, **caractérisé en ce qu'**un bouclier (32) déformable relie le bord du plateau (5) et le bord (31) de la base pour sa part non située en retrait.

6. Chariot d'atelier selon l'une des revendications précédentes, **caractérisé en ce que** la base est formée par un longeron (36) et une traverse (38), le niveau supérieur de l'un étant situé sous le niveau supérieur de l'autre, le niveau inférieur appartenant à la traverse ou au longeron perpendiculaire à l'axe (6) de basculement.

7. Chariot d'atelier selon l'une des revendications précédentes, **caractérisé en ce que** l'organe élastique de rappel du plateau est constitué par un ensemble oléo-pneumatique (60) comprenant un vérin hydraulique (61) en communication avec une nourrice pressurisée (62) par l'intermédiaire de restrictions (64,66) de débit réglables.

8. Chariot d'atelier selon l'une des revendications précédentes, **caractérisé en ce qu'**il comporte deux patins (4) de blocage de sa position, chacun d'eux coopérant avec un mécanisme à pédales (43,51) de manoeuvre par lequel chaque patin est mis en service par une pédale (43) qui lui est directement attelée et par lequel les deux patins sont simultanément mis hors service.

9. Chariot d'atelier selon l'une des revendications précédentes, **caractérisé en ce que** le loquet de blocage(8) est porté par un levier à manoeuvre manuelle, articulé (11) à la base roulante (1) à l'une de ses extrémités longitudinales.

10. Chariot selon l'une des revendications précédentes, **caractérisé en ce qu'**il comporte des béquilles (7) anti-basculement au moins d'un côté.

## Claims

1. A workshop trolley comprising a wheeled base (1) fitted at its two opposite ends with members (2, 3) enabling it to be coupled to other wheeled bases or to a tractor vehicle, fitted in its bottom portion with wheel members (4) for running forwards, backwards, and sideways, and fitted with at least one tray (5) tiltably mounted above the base (1) to tilt about an axis (6) parallel to said base, the trolley including, between the wheeled base (1) and the tray (5), a latch (8) for blocking the tray in a horizontal position and in an inclined position, the trolley being **characterized in that** the top face of the tray includes means (26) for receiving and chocking a container in such a manner that the vertical projection of the center of gravity of the assembly comprising the tray and the container is offset relative to the tilt axis (6) on the side of tilting, and **in that** a resilient member (16) for returning the tray (5) to its horizontal position is coupled between the wheeled base (1) and the tray (5), the force of said member being less than the couple that results from the above-mentioned offset of the center of gravity when the container (5) is loaded, and being greater than said couple when the container is empty.

2. A workshop trolley according to claim 1, **characterized in that** the tilt axis (6) extends longitudinally.

3. A workshop trolley according to claim 1, **characterized in that** the tilt axis (6) extends transversely.

4. A workshop trolley according to any preceding claim, **characterized in that** the edge (1a) of the wheeled base (1) on the tilting side is for the most part set back (r) from the corresponding edge (5a) of the tray (5).

5. A workshop trolley according to claim 4, **characterized in that** a deformable shield (32) connects the edge of the tray (5) to the edge (31) of the base for its portion that is not set back.

6. A workshop trolley according to any preceding claim, **characterized in that** the base is formed by a longitudinally-extending member (36) and a cross-member (38), the top level of one being situated beneath the top level of the other, the bottom level, belonging to the cross-member or to the longitudinally-extending member, being perpendicular to the tilt axis (6).

7. A workshop trolley according to any preceding claim, **characterized in that** the resilient return member of the tray is constituted by an oleo-pneumatic assembly (60) comprising a hydraulic actuator (61) in communication with a pressure feeder (62) via adjustable flow rate constrictions (64, 66).

8. A workshop trolley according to any preceding claim, **characterized in that** it includes two shoes (42) for blocking its position, each co-operating with a controlling pedal mechanism (43, 51), thereby enabling each shoe to be put into operation by a pedal (43) that is directly coupled thereto, and whereby both shoes are put into service simultaneously.

9. A workshop trolley according to any preceding claim, **characterized in that** the blocking latch (8) is carried by a manual operating lever that is hinged (11) to the wheeled base (1) at one of its longitudinal ends.

10. A trolley according to any preceding claim, **characterized in that** it includes anti-tilt struts (7) at least on one side.

## Patentansprüche

1. Werkstattwagen, umfassend ein rollbares Untergestell (1), das an seinen beiden entgegengesetzten Enden mit Elementen (2, 3) für seine Ankopplung an weitere rollbare Untergestelle oder an ein Zugfahrzeug und im unteren Teil mit einem vorderen, einem hinteren sowie seitlichen Rollelementen (4) versehen ist, und mindestens eine Platte (5), die oberhalb des Untergestells (1) kippbar um eine Achse (6) gelagert ist, die parallel zu diesem Untergestell ist, und die zwischen dem rollbaren Untergestell (1) und der Platte (5) eine Klinke (8) zum Blockieren der Platte (5) in einer horizontalen Stellung und in einer geneigten Stellung hat, **dadurch gekennzeichnet, dass** die obere Fläche der Platte Mittel (26) zum Aufnehmen und Verkeilen eines Behälters umfasst, derart, dass die vertikale Projektion des Schwerpunktes der Einheit aus Platte/Behälter in Bezug auf die Kippachse (6) zur Seite des Kippens hin versetzt ist, und dass ein elastisches Rückstellelement (16) zum Rückstellen der Platte (5) in ihre horizontale Stellung zwischen dem rollbaren Untergestell (1) und der Platte (5) angeordnet ist, wobei die Kraft dieses Elements geringer als das aus der oben genannten Verschiebung des Schwerpunktes resultierende Kippmoment ist, wenn der Behälter (5) beladen ist, und größer als dieses Kippmoment ist, wenn der Behälter leer ist.

2. Werkstattwagen nach Anspruch 1, **dadurch gekennzeichnet, dass** die Kippachse (6) eine Längsachse ist.

3. Werkstattwagen nach Anspruch 1, **dadurch gekennzeichnet, dass** die Kippachse (6) eine Querachse ist.

4. Werkstattwagen nach einem der vorhergehenden Ansprüche, **dadurch gekennzeichnet, dass** der Rand (1a) des rollbaren Untergestells (1) auf der Kippseite über seinen größten Teil gegenüber dem entsprechenden Rand (5a) der Platte (5) um einen Betrag (r) zurückversetzt ist.

5. Werkstattwagen nach Anspruch 4, **dadurch gekennzeichnet, dass** eine verformbare Abschirmung (32) den Rand der Platte (5) und den Rand (31) des Untergestells in dessen nicht zurückgesetztem Teil verbindet.

6. Werkstattwagen nach einem der vorhergehenden Ansprüche, **dadurch gekennzeichnet, dass** das Untergestell aus einem Längsträger (36) und einem Querträger (38) gebildet ist, wobei sich das obere Niveau des einen unter dem oberen Niveau des anderen befindet, und wobei das untere Niveau zum Querträger oder zum Längsträger gehört, der senkrecht zur Kippachse (6) steht.

7. Werkstattwagen nach einem der vorhergehenden Ansprüche, **dadurch gekennzeichnet, dass** das elastische Rückstellelement zum Rückstellen der Platte aus einer oleopneumatischen Einheit (60) gebildet ist, die einen Hydraulikzylinder (61) umfasst, der über einstellbare Durchflussdrosselungen (64, 66) mit einem Druckbehälter (62) in Verbindung steht.

8. Werkstattwagen nach einem der vorhergehenden Ansprüche, **dadurch gekennzeichnet, dass** er zwei Blockierschuhe (4) zum Blockieren seiner Position umfasst, wobei jeder von ihnen mit einem Betätigungsmechanismus mit Pedalen (43, 51) zusammenwirkt, durch den jeder Schuh durch ein Pedal (43), das direkt an diesem angehängt ist, in Betrieb genommen wird, und durch den beide Schuhe gleichzeitig außer Betrieb gesetzt werden.

9. Werkstattwagen nach einem der vorhergehenden Ansprüche, **dadurch gekennzeichnet, dass** die Blockierklinke (8) von einem Handbetätigungshebel getragen wird, der an dem rollbaren Untergestell (1) an einem der Längsenden desselben angelenkt (11) ist.

10. Werkstattwagen nach einem der vorhergehenden Ansprüche, **dadurch gekennzeichnet, dass** er auf mindestens einer Seite Antikippstützen (7) umfasst.
